# EUROPÄISCHE PATENTSCHRIFT

(11) **EP 1 900 979 B1**
(45) Veröffentlichungstag und Bekanntmachung des Hinweises auf die Patenterteilung: **02.06.2010**
(21) Anmeldenummer: 07116183.0
(22) Anmeldetag: 12.09.2007
(51) Int. Cl.: F16J 15/06, F16J 15/10

(54) **Dichtungssystem zwischen zwei Bauteilen**
Sealing system between two components
Système d'étanchéification entre deux composants

(30) Priorität: 13.09.2006 DE 202006014281 U
(43) Veröffentlichungstag der Anmeldung: 19.03.2008
(73) Patentinhaber: MANN+HUMMEL GmbH, 71638 Ludwigsburg (DE)
(72) Erfinder: Fasold, Michael, 71549, Auenwald (DE); Tschech, Thomas, 71672, Marbach (DE)

(56) Entgegenhaltungen:
- EP-A- 0 974 441
- DE-A1-102004 058 481
- JP-A- 6 221 441
- US-A1- 2006 006 612

## Beschreibung

### Technisches Gebiet

Die Erfindung bezieht sich auf ein Dichtungssystem zwischen zwei Bauteilen nach dem Oberbegriff des Anspruches 1.

### Stand der Technik

Ein derartiges Dichtungssystem, das zur Abdichtung des Kontaktbereiches zwischen einem Zylinderkopf und einer Zylinderkopfhaube eingesetzt wird, ist in der US 2003/0037756 A1 beschrieben. Das Dichtungssystem umfasst ein ringförmiges Dichtungselement, das in eine ebenfalls ringförmige Dichtnut eingesetzt ist, die im Randbereich der Zylinderkopfhaube umläuft und einteilig mit der Haubenwandung ausgebildet ist. Zur Verbesserung der Dichtwirkung ist einteilig mit dem Dichtkörper des Dichtungselementes eine überstehende Dichtlippe ausgebildet, die außerhalb der Dichtnut liegt und zwischen einem Fortsatz am Zylinderkopf und einer Seitenwandung der Zylinderkopfhaube eingeklemmt ist. Auf diese Weise werden sowohl axiale als auch radiale Dichtkräfte zwischen Zylinderkopf und Zylinderkopfhaube übertragen.

Generell ist bei derartigen Dichtungssystemen darauf zu achten, dass die im Querschnitt U-förmige Dichtnut, in die das Dichtungselement eingesetzt ist, eine ausreichend hohe Festigkeit und Steifigkeit aufweist, um Radialdichtkräfte aufbringen zu können.

Zum weiteren Stand der Technik wird noch auf die DE 10 2004 058 481 A1 verwiesen, aus der ebenfalls ein ringförmiges Dichtungssystem an einer Zylinderkopfhaube zur Abdichtung gegenüber dem Zylinderkopf einer Brennkraftmaschine bekannt ist. Zur Stabilisierung ist in das Dichtungselement ein Stützring eingebracht, der vollständig vom Dichtmaterial umschlossen ist. Dieses Dichtungssystem wird als das gattungsgemäße Dichtungssystem angesehen.

Darüber hinaus ist aus der US 2006/0006612 A1 ein Dichtungselement bekannt, in das ein Hohlraum eingebracht ist. Desweiteren ist in der EP 0 974 441 A1 ein Dichtungselement zwischen einem Zylinderkopf und einer Zylinderkopfhaube gezeigt, das in eine Nut an der Stirnseite eines Flansches der Zylinderkopfhaube eingebracht ist. Die Kräfte zwischen dem Zylinderkopf und der Zylinderkopfhaube werden über die seitlichen Nutwandungen der das Dichtungselement aufnehmenden Nut übertragen, wobei die Nutwandungen stirnseitig auf der Oberseite des Zylinderkopfes aufliegen, so dass Schwingungen, welche vom Zylinderkopf ausgehen, ungedämpft oder nur geringfügig gedämpft auch auf die Zylinderkopfhaube übertragen werden.

### Offenbarung der Erfindung

Von diesem Stand der Technik ausgehend, liegt der Erfindung die Aufgabe zugrunde, ein Dichtungssystem zwischen zwei Bauteilen zu schaffen, das einerseits konstruktiv einfach aufgebaut ist und andererseits eine hohe Haltbarkeit besitzt.

Diese Aufgabe wird erfindungsgemäß mit den Merkmalen des Anspruches 1 gelöst. Die Unteransprüche geben zweckmäßige Weiterbildungen an.

Das erfindungsgemäße Dichtungssystem, das zwischen zwei Bauteilen, insbesondere zwischen zwei Fahrzeugbauteilen wie beispielsweise einem Zylinderkopf und einer Zylinderkopfhaube eingesetzt wird, umfasst ein Dichtungselement und einen mit dem Dichtungselement verbundenen Stützkern, in den mindestens ein Hohlraum eingebracht ist, der im Stützkern eingeschlossen ist. In dieser Ausführung weist das Dichtungssystem eine hohe Festigkeit und Steifigkeit auf, die von dem Stützkern aufgebracht wird. Zugleich besitzt der Stützkern aber im Vergleich zu massiv ausgeführten Kernen ein erheblich reduziertes Gewicht, außerdem ist auch der Bauteilverzug reduziert. Der Stützkern ist fertigungs- und funktionstechnisch optimiert, es ist nur ein Minimum an Material für die Erzeugung des Stützkerns erforderlich.

Erfindungsgemäß ist eine zusätzliche, zu einer Seite offene Aussparung im Stützkern vorgesehen, die zumindest teilweise mit Dichtmaterial ausgefüllt ist. Auf diese Weise wird eine feste Verbindung zwischen Stützkern und Dichtmaterial geschaffen, indem die Aussparung, die zu einer weiteren Reduzierung des Stützkerngewichtes beiträgt und außerdem den Bauteilverzug reduziert, in einer zusätzlichen Funktion das Dichtmaterial aufnimmt. In diese Aussparung, die mit dem Dichtmaterial ausgekleidet ist, können entsprechende Vorsprünge, Zapfen oder dergleichen dichtend einragen, welche an dem zweiten Bauteil angeordnet sind. Die Aussparung mit dem Dichtmaterial erlaubt eine kraftübertragende Verbindung und eine Dichtfunktion zwischen den Bauteilen in Radialrichtung.

Um die Dauerhaltbarkeit des Dichtungssystems zu verbessern, kann es zweckmäßig sein, den Werkstoff des Stützkerns mit einem Glasfaseranteil zu verstärken, wobei vorteilhaft bis zu 30 % Glasfasern beigegeben werden. In Betracht kommen sämtliche Beimischungen zwischen 0 % und 30 % Glasfasern, ggf. aber auch ein höherer Anteil an Glasfasern oder andere, beispielsweise mineralische Füll- und Verstärkungsstoffe. Als Grundmaterial für den Stützkern wird zweckmäßig Polyamid (PA) verwendet, beispielsweise PA 66 oder PA 6.

Bei dem erfindungsgemäßen Verfahren zur Herstellung eines Dichtungssystems, das ein Dichtungselement und einen Stützkern umfasst, werden Hohlräume in den Stützkern mithilfe der Wasser-Injektions-Technik (WIT) eingebracht, wobei alternativ zum WIT-Verfahren auch eine Gas-Injektions-Technik (GIT) verwendet werden kann. Sowohl das WIT-Verfahren als auch das GIT-Verfahren beruhen auf der Kernidee der Fluid-Injektions-Technik, bei der ein fluides Medium - Gase oder Flüssigkeiten - zur Herstellung polymerer Hohlkörper injiziert wird. Bei der Anwendung dieses Verfahrens zum Einbringen der Hohlräume in den Stützkern wird eine bestmögliche Einsparung an Material und Zykluszeit erreicht.

In einem Nachfolgeprozess, der sich an den Fertigungsprozess des Stützringes anschließt, wird Dichtungsmaterial an die Außenwandung des Stützkerns bzw. in die Aussparungen an- bzw. eingespritzt, die in den Stützkern eingebracht werden und zumindest nach einer Seite hin offen sind. Sowohl die Menge als auch die mit dem Dichtungsmaterial bedeckten Flächen bzw. Bereiche am Stützkern können auf den jeweiligen Einsatzzweck hin ausgewählt und optimiert werden.

Mit dem Anspritzen des Dichtungsmaterials an den Stützkern kann zugleich der Kontakt und die Anbindung an das zweite Bauteil erfolgen, an das das Dichtungssystem angebunden werden soll, beispielsweise die Zylinderkopfhaube. Hierbei wird in einem Verfahrensschritt - ggf. in mehreren Verfahrensschritten - das Dichtungsmaterial an den Stützkern angespritzt und außerdem an die Wandungen des Bauteils, zu dem die Verbindung geschaffen werden soll. Neben dem fertigungstechnischen Vorteil weist diese Vorgehensweise den Vorzug auf, dass die Anbindung zwischen Dichtungssystem und Bauteil über das verhältnismäßig weiche und dämpfungsaktive Dichtungsmaterial erfolgt, wodurch eine optimale Schwingungsdämpfung zwischen den beiden zu verbindenden und abzudichtenden Bauteilen realisiert werden kann.

Das Dichtungssystem und das Verfahren zur Herstellung des Dichtungssystems eignet sich insbesondere zur Anwendung eines umlaufenden Stützringes, der über seine axiale Länge gesehen vollständig oder teilweise mit Dichtungsmaterial bedeckt ist. Als Dichtungsmaterial kommen handelsübliche Werkstoffe, insbesondere Elastomere in Betracht.

### Kurze Beschreibung der Zeichnungen

Weitere Vorteile und zweckmäßige Ausführungen sind den weiteren Ansprüchen, der Figurenbeschreibung und den Zeichnungen zu entnehmen.

### Es zeigen:

Fig. 1 eine Seitenansicht auf ein Dichtungssystem,

Fig. 2 ein Schnitt durch das Dichtungssystem gemäß Schnittlinie II-II aus Fig. 1.

### Ausführungsform(en) der Erfindung

Das in den Figuren dargestellte Dichtungssystem 1 umfasst einen Stützkern 2, der insbesondere als umlaufender Stützring ausgebildet ist, sowie Dichtungselemente 3, die aus einem Elastomer bestehen und an den Stützkern 2 angespritzt sind. Der Stützkern 2 besteht aus Polyamid und kann ggf. mit einem Glasfaseranteil von bis zu 30 % verstärkt sein. In den Stützkern 2 sind Aussparungen 6, 7 eingebracht, von denen die Aussparung 6 als zu einer Seite hin offene, nutförmige Ausnehmung und die Aussparung 7 als vollständig umschlossener Hohlraum innerhalb des Stützkernes 2 ausgeführt sind. Der Hohlraum 7 wird mittels eines WIT-Prozesses oder GIT-Prozesses bei der Fertigung des Stützkerns in diesen eingebracht. Der Vorteil dieser Aussparungen liegt in der maximal möglichen Materialeinsparung bei zugleich hoher Festigkeit und Steifigkeit. Außerdem kann ein optisch ansprechendes Design erreicht werden, da auf Rippen, Querstege oder sonstige Hilfsmaßnahmen zur Erhöhung der Steifigkeit verzichtet werden kann. Der Hohlraum 7 folgt der Form des Stützkerns und ist insbesondere in gleicher Weise wie dieser als umlaufender Ring ausgebildet.

Das angespritzte Dichtungsmaterial des Dichtungselementes 3 umfasst einen Teil, der in die Ausnehmung 6 eingespritzt ist, wobei sowohl der Boden der Ausnehmung als auch die Seitenwände mit dem Dichtmaterial bekleidet sind. Im Bereich der Seitenwände weist das Dichtmaterial radial einragende Dichtlippen 9 auf, die eine radial dichte Verbindung gewährleisten sollen.

Des Weiteren umfassen die Dichtungselemente 3 einen Bestandteil 3a, der am Außenmantel des Stützkerns 2 angespritzt ist und über den die Verbindung zum anderen Bauteil 5 hergestellt wird, bei dem es sich im Ausführungsbeispiel um die Zylinderkopfhaube handelt. Dieser Teil des Dichtungselementes kann entweder an die Zylinderkopfhaube 5 unmittelbar angespritzt oder mit sonstigen Maßnahmen mit der Zylinderkopfhaube 5 verbunden werden, beispielsweise durch Einknöpfen oder dergleichen.

In die Ausnehmung 6 ragt in der Dichtposition eine Erhebung 8 ein, die fest mit dem weiteren Bauteil 4 - im Ausführungsbeispiel der Zylinderkopf - verbunden ist. Diese Erhebung 8 ist an die Form der Ausnehmung 6 angepasst, es handelt sich hierbei insbesondere um eine umlaufende, rippenförmige Erhebung, ggf. aber auch um einzelne Zapfen oder dergleichen.

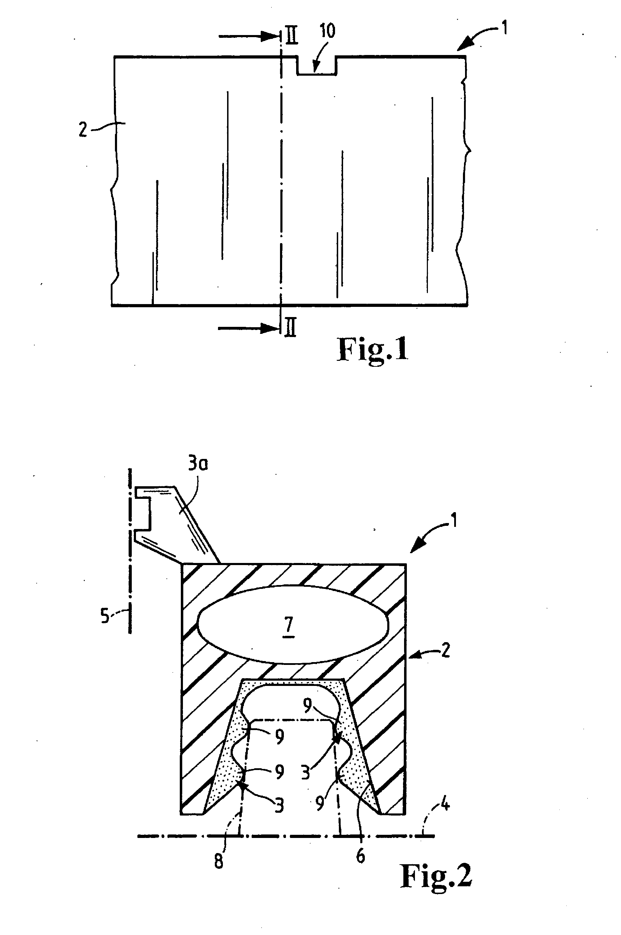

Wie Fig. 1 zu entnehmen, kann an der Oberseite des Stützkerns 2 ein Vertikalsteg 10 als Fließhilfe für die Anspritzung des Dichtmaterials 9 im Elastomerprozess vorgesehen sein.

## Patentansprüche

1. Dichtungssystem zwischen zwei Bauteilen, mit einem Dichtungselement (3) und einem Stützkern (2), der mit dem Dichtungselement (3) verbunden ist, wobei eine zusätzliche, zu einer Seite offene Aussparung (6) in den Stützkern (2) eingebracht ist, die als nutförmige Ausnehmung ausgeführt ist, und wobei sowohl der Boden der Ausnehmung als auch die Seitenwände mit Dichtmaterial bekleidet sind, **dadurch gekennzeichnet, dass** in den Stützkern (2) mindestens ein Hohlraum (7) eingebracht ist, der im Stützkern (2) eingeschlossen ist, und dass das Dichtmaterial im Bereich der Seitenwände radial einragende Dichtlippen (9) aufweist.

2. Dichtungssystem nach Anspruch 1, **dadurch gekennzeichnet, dass** der Stützkern (2) als umlaufender Stützring ausgebildet ist.

3. Dichtungssystem nach Anspruch 1 oder 2, **dadurch gekennzeichnet, dass** der Stützkern (2) aus Polyamid (PA) besteht, insbesondere aus PA66 oder PA6.

4. Dichtungssystem nach einem der Ansprüche 1 bis 3, **dadurch gekennzeichnet, dass** dem Material des Stützkems (2) bis zu 60 %, bevorzugt bis zu 30 % Glasfasern beigegeben sind.

5. Dichtungssystem nach einem der Ansprüche 1 bis 4, **gekennzeichnet durch** eine Anbindung an eines der abzudichtenden Bauteile über angespritztes Dichtmaterial.

6. Verfahren zur Herstellung eines Dichtungssystems nach einem der Ansprüche 1 bis 5, **dadurch gekennzeichnet, dass** der Hohlraum (7) mittels der Wasser-Injektions-Technik (WIT) oder der Gas-injektions-Technik (GIT) in den Stützkern (2) eingebracht wird.

7. Verfahren nach Anspruch 6, **dadurch gekennzeichnet, dass** das Dichtungselement (3) an den Stützkern (2) angespritzt wird.

8. Verwendung des Dichtungssystem nach einem der Ansprüche 1 bis 5 zwischen einem Zylinderkopf einer Brennkraftmaschine und einer Zylinderkopfhaube.

## Claims

1. Sealing system between two subassemblies, with a sealing element (3) and a supporting core (2) connected with the sealing element (3), an additional recess (6) open at one side being incorporated into the supporting core (2) which is designed as groove-shaped recess, and the bottom of the recess as well as the lateral walls being covered with sealing material, **characterized in that** at least one cavity (7) is incorporated into the supporting core (2) which is embedded in the supporting core (2) and that the sealing material features radially projecting sealing lips (9) in the area of the lateral walls.

2. Sealing system according to claim 1, **characterized in that** the supporting core (2) is designed as circumferential support ring.

3. Sealing system according to claim 1 or 2, **characterized in that** the supporting core (2) is made of polyamide (PA), in particular of PA66 or PA6.

4. Sealing system according to one of the claims 1 to 3, **characterized in that** up to 60%, preferably up to 30%, of glass fibers are added to the material of the supporting core (2).

5. Sealing system according to one of the claims 1 to 4, **characterized by** binding it to one of the subassemblies to be sealed by means of injection-molded sealing material.

6. Method for manufacturing a sealing system according to one of the claims 1 to 5, **characterized in that** the cavity (7) is incorporated into the supporting core (2) by means of the water injection technology (WIT) or the gas injection technology (GIT).

7. Method according to claim 6, **characterized in that** the sealing element (3) is injection-molded to the supporting core (2).

8. Utilization of the sealing system according to one of the claims 1 to 5 between a cylinder head of an internal combustion engine and a cylinder head cover.

## Revendications

1. Système d'étanchéité entre deux pièces, avec un élément d'étanchéité (3) et une âme de soutien (2) qui est reliée à l'élément d'étanchéité (3), un évidement supplémentaire (6) ouvert en direction d'un côté étant ménagé dans l'âme de soutien (2), évidement qui est réalisé en forme de rainure, et tant le fond de l'évidement que les parois latérales étant revêtus d'un matériau d'étanchéité, **caractérisé en ce qu'**au moins une cavité (7) est ménagée dans l'âme de soutien (2) qui est enfermée dans l'âme de soutien (2), et que le matériau d'étanchéité présente, au niveau des parois latérales, des lèvres d'étanchéité (9) en saillie radiale.

2. Système d'étanchéité selon la revendication 1, **caractérisé en ce que** l'âme de soutien (2) est conformée en bague de soutien périphérique.

3. Système d'étanchéité selon la revendication 1 ou 2, **caractérisé en ce que** l'âme de soutien (2) est réalisée en polyamide (PA), en particulier en PA66 ou PA6.

4. Système d'étanchéité selon l'une des revendications 1 à 3, **caractérisé en ce qu'**au matériau de l'âme de soutien (2) sont ajoutés jusqu'à 60 %, de préférence jusqu'à 30 %, de fibres de verre.

5. Système d'étanchéité selon l'une des revendications 1 à 4, **caractérisé par** une liaison avec l'une des pièces à étancher par l'intermédiaire d'un matériau d'étanchéité appliqué par injection.

6. Procédé de fabrication d'un système d'étanchéité selon l'une des revendications 1 à 5, **caractérisé en ce que** la cavité (7) est ménagée dans l'âme de soutien (2) par la technique d'injection d'eau ou par la technique d'injection de gaz.

7. Procédé selon la revendication 6, **caractérisé en ce que** l'élément d'étanchéité (3) est appliqué par injection sur l'âme de soutien (2).

8. Utilisation du système d'étanchéité selon l'une des revendications 1 à 5 entre une culasse de cylindre d'un moteur à combustion interne et un couvercle supérieur des soupapes.
